# EUROPEAN PATENT APPLICATION

(11) **EP 3 511 731 A1**
(43) Date of publication of application: **17.07.2019**
(21) Application number: 19150035.4
(22) Date of filing: 02.01.2019
(51) Int. Cl.: G01S 5/04, G01S 5/02, G01S 7/02

(54) **UNMANNED AERIAL VEHICLE DETECTION SYSTEM AND DETECTION METHOD**

(30) Priority: 05.01.2018 TW 10700460
(71) Applicant: Easymap Digital Technology Inc., 40764 Taichung City (TW)
(72) Inventor: HSIAO, YUAN-CHAN, 40764 Taichung City (TW); TU, CHIH-HSIEN, 40764 Taichung City (TW); WU, PAO-JUNG, 40764 Taichung City (TW); CHOU, TIEN-YIN, 40764 Taichung City (TW)
(74) Representative: Lang, Christian

(57) **Abstract**

An unmanned aerial vehicle (UAV) detection system (101) and detection method are provided. The UAV detection system includes: an antenna module (104), including two receiving antennas (108) separate, with respect to a space each antenna being capable of multi-orientationally receiving signals, for receiving an operational signal from an UAV; a processing/controlling module (105), including a signal filtering unit (110) and a triangulation detection unit (111) connected with the signal filtering unit (110), the signal filtering unit (110) filtering out radio frequency (RF) signal of the operational signal received by the antenna module (104) and obtaining at least one of RF 2.4GHz and RF 5.8GHz signals, the triangulation detection unit (111) calculating height, orientation and distance of the UAV according to the filtered RF signal.

## Description

### BACKGROUND OF THE INVENTION

### Field of the Invention

The present invention relates to an unmanned aerial vehicle (UAV) detection system and an UAV detection method.

### Description of the Prior Art

Unmanned aerial vehicles (UAV) such as commercial drones are become widely available. Some applications of the UAVs have significant benefits such as faster delivery of packages and surveillance for safety issues; however, some applications have malicious effects such as spy on individuals or invasion of private and prohibited areas. Therefore, there is a need for a technology to detect an UAV and to deter the UAV before it does harms to individuals or invades prohibited areas. The detection of an UAV may be achieved by identifying the UAV with peak harmonic matching of sound generated during operation of the UAV. However, sound signal may be diminished quickly if the UAV is far away from the detection system or may be covered up easily by acoustic noises on background. Alternatively, most drones typically are allowed to operate in several major frequency bands over RF spectrum such as RF 1.5, 2.4 and 5.8 GHz so that the detection of an UAV may be achieved by identifying the UAV by filtering out RF band signals other than the three major operational radio frequencies of the UAV. However, in an environment such as urban areas, lots of radio frequency signals are transmitted and exchanged in the air, resulting in strong radio frequency interference. The radio frequency interference makes an effective filtering of RF bands difficult.

The present invention is, therefore, arisen to obviate or at least mitigate the above-mentioned disadvantages.

### SUMMARY OF THE INVENTION

The main object of the present invention is to provide an unmanned aerial vehicle (UAV) detection system and an UAV detection method.

To achieve the above and other objects, the present invention provides an UAV detection system includes: an antenna module, including two receiving antennas separate, with respect to a space each antenna being capable of multi-orientationally receiving signals, for receiving an operational signal from an UAV; a processing/controlling module, including a signal filtering unit and a triangulation detection unit connected with the signal filtering unit, the signal filtering unit filtering out radio frequency (RF) signal of the operational signal received by the antenna module and obtaining at least one of RF 2.4GHz and RF 5.8GHz signals, the triangulation detection unit calculating height, orientation and distance of the UAV according to the filtered RF signal.

To achieve the above and other objects, the present invention further provides an UAV detection method using the UAV detection system of claim 1, including steps of: receiving the operational signal from the UAV in the space by the antenna module; filtering out the RF signal of the operational signal received by the antenna module and obtaining at least one of RF 2.4GHz and RF 5.8GHz signals by the signal filtering unit; calculating height, orientation and distance of the UAV according to the filtered RF signal by the triangulation detection unit.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a schematic representation of a portable RF interference device according to one embodiment of the invention;
Fig. 1A is a schematic representation of an antenna module of an UAV detection system;
Fig. 2 illustrate a triangulation process for locking in an UAV according to one embodiment of the invention; and
Fig. 3 shows a flow chart of detection of UAV according to one embodiment of the invention.

### DETAILED DESCRIPTION OF THE PREFERRED EMBODIMENTS

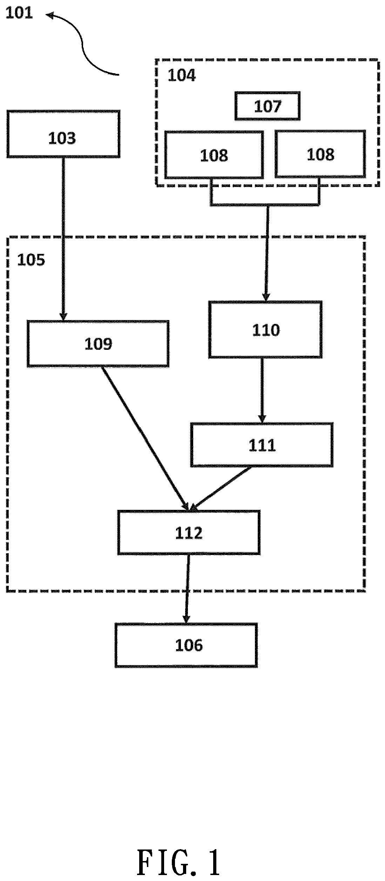

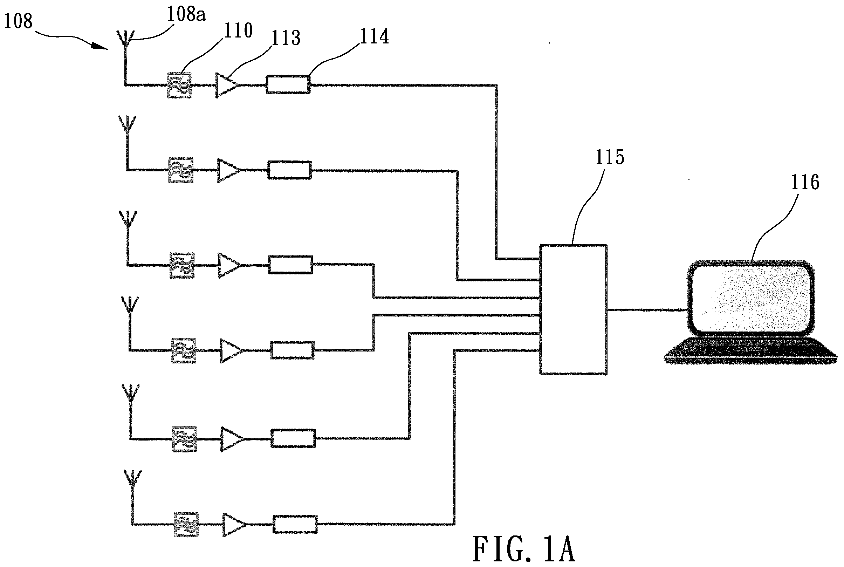

Please refer to Figs. 1, 1A, 2 and 3 for a preferable embodiment of the present invention. The invention is directed to a system, method and apparatus for UAV detection. The system and apparatus for the UAV detection may be portable. The UAV detection system may comprise a high definition (HD) image sensor to take a photo of an UAV, an antenna module in search of the UAV by triangulation (triangulation is the process of determining the location of a point by forming triangles to it from known points), a processing/control module to process the signals from the sensors and to make a decision whether an UAV is identified, and a monitor display to display on a screen where the UAV is. The antenna module further includes two directional antennas configured to specifically detect at least one of the RF 2.4 GHz and 5.8 GHz signals and at least one motor device configured to adjust the directional antennas to track the UAV in distance. The processing/control module further includes an image processing unit to process the photo image data from the HD image sensor, a signal filtering unit configured to filtering the RF spectrum to extract the signals at RF 2.4 or/and 5.8 GHz GHz used for the UAV, a triangulation unit configured to control the triangulation process and a control/alert unit to analyze data coming from other units and determine if there is an UAV. It is noted that the image sensor and the monitor display are optional.

Fig. 1 shows a representative block diagram of an UAV detection system according to one embodiment of the invention. UAV detection system 101 comprises a HD image sensor 103, an antenna module 104, a processing/control module 105 and a monitor display 106. The HD image sensor 103 may be of at least 4k resolution to extract HD images and may be provided with CCD imagers, CMOS imagers and/or the combination thereof.

In this embodiment, the antenna module 104 further includes a motor device 107 and two receiving antennas such as 2.4 GHz directional antennas 108. The directional antennas 108 are separated by a fixed distance and both are configured to have high responsivity to RF 2.4 GHz frequency and to search for the UAV signal of strongest magnitude. The motor device 107 is configured to adjust altitude and azimuth angles of the directional antennas. That is, the focus of each of the directional antennas can be shifted by the motor device in vertical and horizontal directions. The distance between the two directional antennas 108 may be so arranged that the triangulation process can be carried out without mutually interference. For example, the distance may be as long as 10 meters at least. As shown in Fig. 1A, each receiving antenna may include a plurality of (such as 6, less or more) antenna members 108a, and the plurality of antenna members are equiangularly arranged in a 360-degree configuration. However, each receiving antenna may include a single antenna member, and the single antenna member is a rotatable 360-degree scanning antenna member. Whereby, no driving device is required fort the antenna module, and the antenna module is still capable of multi-orientationally receiving signals.

The processing/control module 105 further includes an image processing unit 109 (which is optional) to process the image data extracted by the image sensor 103, a signal filtering unit 110 that filters the signals of RF spectrum in search of at least one of the RF 2.4 GHz and 5.8 GHz signals which are most probably representative of UAVs, a triangulation unit 111 that determines whether the directional antennas target an UAV and generates parameters relevant to the location of the UAV, and a control/alert unit 112 that makes final decision if an UAV is detected based on the information of the image processing unit and the triangulation unit (based only on the signal from the triangulation unit when the image sensor and the image processing unit are omitted) . The control/alert unit 112 may further send an alerting signal such as warning sound or light to a RF interference system which can expel or disable the identified UAV. The monitor display 106 may display the location of the identified UAV. A signal amplifier 113 may be connected with and between the signal filtering unit 110 and the triangulation detection unit 111, for amplifying the filtered RF signal; a DC converter 114 may be connected with and between the signal amplifier 113 and the triangulation detection unit 111 to convert the filtered RF signals into DC signals, for being easy for processing, analyzing and feature extraction of the filtered RF signal which is transmitted to a processing device 116 such as computer through a hub 115.

If the filtered signals output from the filtering unit 110 include the RF 2.4 GHz signal which derives from an UAV, triangulation process may be initiated by the triangulation unit 111. Furthermore, the image processing unit 109 may confirm with the triangulation unit 111 in regard to the location of the UAV depending on the image date it processed.

As mentioned in the preceding paragraphs, strong radio frequency interference arises in an environment full of RF signal transmission so that the radio signals of an UAV at the major RF bands (i.e., 2.4 and 5.8 GHz) are difficult to be detected by a typical RF detection system. In particular, the sources of RF 2.4 GHz signals are pervasive in urban areas and cities, resulting in that the RF 2.4 GHz signal which derives from the an UAV becomes even harder to be detected.

Furthermore, TCP/IP signal packet including access point (AP) and wifi signals is pervasive in air space and is one of the main sources to interfere RF 2.4 GHz spectrum. TCP/IP wireless signal packet transmission in general involves a handshake process that establishes a communication channel between two devices. Therefore, distinguishing the UAV signal packet from TCP/IP signal packet plays a key role in filtering the RF spectrum to identify the RF 2.4 GHz signal that derives from the UAV.

In one embodiment of the invention, a signal packet identification technology is provided with the signal filtering unit 110. By analyzing the signal packet features of wireless communication channels established in handshake processes within the coverage of the UAV detection system, the signal packet identification can discard the signal packet features involved in TCP/IP handshake and leave those involved in UAV operation to the triangulation unit for the UAV identification. To simply put, the signal filtering unit 110 is capable of identifying the signal packet feature at RF 2.4 GHz used for an UAV by the means of signal packet identification technology and filtering process.

After the RF signal used for an UAV is extracted by the signal filtering unit 110, the triangulation unit 111 determines whether an UAV is actually targeted and generates the parameters, such as the location and distance of the UAV.

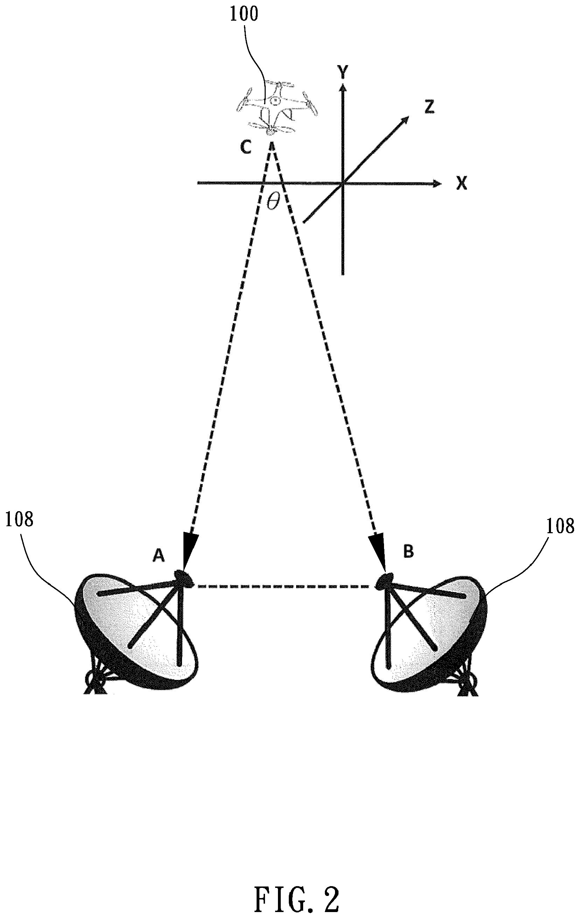

With reference to Fig. 2, the triangulation process is illustrated in more details. In Fig. 2, a triangle (indicated by the dash lines) is defined by locations A and B of the two 2.4 GHz antennas and location C of the signal which is detected as a probable UAV signal. The x axis represents the horizontal direction on which the recipient antennas A and B shift their focuses horizontally by adjusting the azimuth angles; the y axis represents the vertical direction on which the recipient antennas A and B shift their focuses vertically by adjusting the altitude angles.

At initial of the triangulation process, each of the antennas receives respective signals in air space. Then, the signal filtering unit 110 analyzes the signal packet features of the received signals and filters out the RF spectrum which does not include UAV signal packet by the signal packet identification. If the UAV signal packet is detected in the filtered signals, each of the antennas reacts to shift its focus to look for the location where the strongest magnitude of RF 2.4 GHz signal occurs step by step in a decision tree manner until an actual location (i.e., location where the actual strongest magnitude is detected) of the UAV is locked in. For the receiving antenna having the plurality of antenna members as shown in Fig. 1A, it does not have to carry out the decision tree process to find out the location in which the actual strongest magnitude is since the plurality of antenna members can obtain various orientational signals.

Every step in the decision tree is determined based on the outputs of triangulation unit 111. In each step, the directional antenna at location A is rotated either upwards or downwards such that its focus is shifted in either +y or -y direction to track the strongest RF 2.4 GHz signal along the y axis. If the directional antenna A is rotated upwards at initial and receives a stronger RF 2.4 GHz signal after the rotation, the antenna A will repeat upward rotation in the following steps until a downward rotation is required to track that stronger signals. Then, the same antenna is rotated either rightwards or leftwards such that its focus is shifted in either +x or -x direction to track the strongest RF 2.4 GHz signal along the x axis. If the directional antenna A is rotated rightwards at initial and receives a stronger RF 2.4 GHz signal after the rotation, the antenna A will repeat rightward rotation in the following steps until a leftward rotation is required to track that stronger signals. In other words, the directional antenna A continues to be rotated either upwards or downwards and subsequently either rightwards and leftwards in each step during the decision tree process. Once the UAV is locked in by the directional antenna A, the antenna A will be mechanically operated with a loop of upward, downward, rightward and leftward rotations, based on which the triangulation unit knows the UAV has been locked in and generates altitude, azimuth angles and distance of the actual UAV location to the control/alert unit for further determination.

For the directional antenna at location B, the same decision tree steps can be followed repeatedly until the actual location of the UAV is locked in. Once the two antennas have both locked the UAV in by the decision tree process, the distance between antenna A and the UAV or antenna B and the UAV, and the angle 0 can be determined such that the UAV can be identified with an actual location by this triangulation process.

After the UAV is locked in by either one of the two directional antennas, the RF 2.4 GHz signal filtered by the signal filtering unit is sent to the triangulation unit. The triangulation unit generates parameters such as altitude angles, azimuth angles and distance of the UAV, and these parameters will further be confirmed by the image processing unit. After the confirmation, whether an UAV is detected can be determined in the control/alert unit. The monitor display will show the appearance of the UAV on a screen or send a warning signal in response to the determination of the control/alert unit.

In one embodiment of the invention, there may be three optional modes in the configuration of the control/alert unit. If both the triangulation unit and image processing unit do not detect RF 2.4 GHz signal for an UAV, the control/alert unit stays in a safety mode which does nothing but standby. If the triangulation unit detects RF 2.4 GHz signal for an UAV but image processing unit cannot confirm it, the control/alert unit switches to an alert mode which may show a warning signal on the monitor display. If the triangulation unit and image processing unit both detect RF 2.4 GHz signal for an UAV, the control/alert unit switches to a confirmation mode which may zoom in the location of the identified UAV on the display screen in addition to a warning signal sent to a RF interference system.

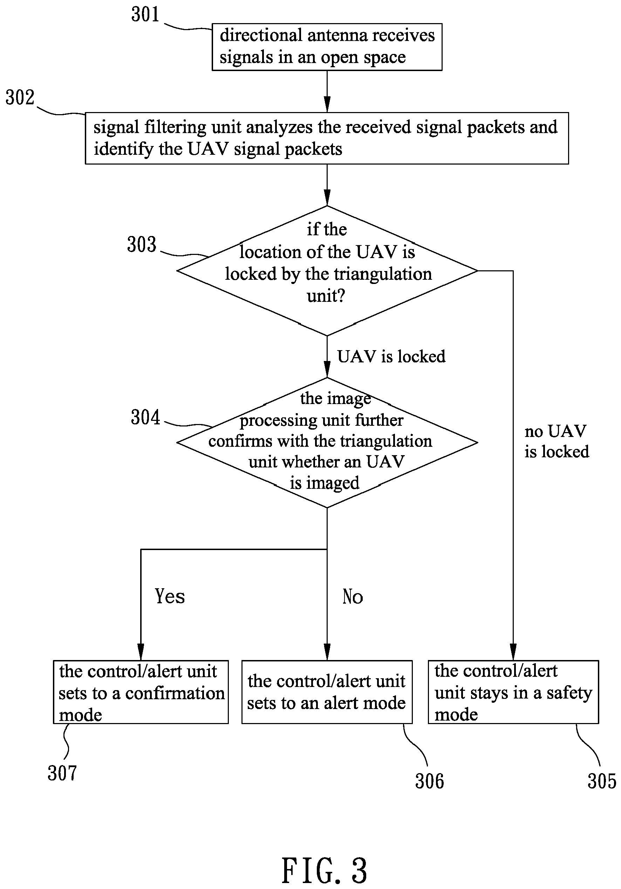

Fig. 3 shows the flow chart for determination of the appearance of an UAV by an UAV detection system according to one embodiment of the invention. Each directional antenna receives signals in the open space under the coverage the UAV detection system at step 301. Signal filtering unit analyzes the received signal packets and identify the UAV signal packets at step 302. If the location of the UAV is locked by the triangulation unit in a decision tree manner at step 303? If no UAV is locked in by the triangulation unit, control/alert unit stays in a safety mode and standby keeping searching for an UAV at step 305. If an UAV is locked in by the triangulation unit, the image processing unit further confirms with the triangulation unit whether an UAV is imaged at step 304. If no confirmation is made, the control/alert unit sets to an alert mode to alert that there is likely to be an approaching UAV at step 306. If a confirmation is made, the control/alert unit sets to a confirmation mode to zoom in the location of the UAV and send a warning signal at step 307.

Typically, an unauthorized UAV is approaching a prohibited area from a far place. To effectively deter or disable the UAV before it approaches at proximity of the prohibited area such as military bases and airport clear zones, a RF interference system may be needed accompanied with the UAV detection system. In a further embodiment of the invention, a RF interference system can be applied in conjunction with the UAV detection system. Once the UAV detection system detects an approaching UAV, the control/alert unit of the detection system may zoom in the location of the UAV on a display and send a warning signal to the RF interference system. The RF interference system may include a sound or light device to indicate receipt of the warning signal or not. If the sound or light device is activated on the RF interference system, an operator who carries this interference system may look for the approaching UAV according to the location of the UAV shown on the display and deter it with RF interference electromagnetic wave.

Although particular embodiments of the invention have been described in detail for purposes of illustration, various modifications and enhancements may be made without departing from the spirit and scope of the invention. Accordingly, the invention is not to be limited except as by the appended claims.

## Claims

1. An unmanned aerial vehicle (UAV) detection system (101), including:
an antenna module (104), including two receiving antennas (108) separate, with respect to a space each antenna (108) being capable of multi-orientationally receiving signals, for receiving an operational signal from an UAV;
a processing/controlling module (105), including a signal filtering unit (110) and a triangulation detection unit (111) connected with the signal filtering unit (110), the signal filtering unit (110) filtering out radio frequency (RF) signal of the operational signal received by the antenna module (104) and obtaining at least one of RF 2.4GHz and RF 5.8GHz signals, the triangulation detection unit (111) calculating height, orientation and distance of the UAV according to the filtered RF signal.

2. The UAV detection system (101) of claim 1, wherein each of the two receiving antennas (108) includes a plurality of antenna members (108a), and the plurality of antenna members (108a) are equiangularly arranged in a 360-degree configuration.

3. The UAV detection system (101) of claim 1, wherein each of the two receiving antennas (108) includes a single antenna member (108a), and the single antenna member (108a) is a rotatable 360-degree scanning antenna member.

4. The UAV detection system (101) of claim 1, wherein a distance between the two receiving antennas (108) is equal to or larger than 10 meters.

5. The UAV detection system (101) of claim 1, further including at least one driving device connected with the two receiving antennas (108), and the driving device is configured to adjust heights and orientations of the two receiving antennas (108).

6. The UAV detection system (101) of claim 1, further including a control/alert unit (112) connected with the triangulation detection unit (111), and the control/alert unit (112) determines if the UAV is detected based on signals from the triangulation detection unit (111).

7. The UAV detection system (101) of claim 6, further including an image sensor (103) configured to obtain images of the space, the processing/controlling module (105) further including an image processing unit (109) to process image data of the images from the image sensor (103), the control/alert unit (112) determine if the UAV is detected based on signals from the image processing unit (109) and the triangulation detection unit (111).

8. The UAV detection system (101) of claim 6, further including a monitor display (106) connected with the control/alert unit (112), the monitor display (106) being configured to display the location of the UAV based on information of the determination of the control/alert unit (112).

9. The UAV detection system (101) of claim 1, wherein a signal amplifier (113) is connected with and between the signal filtering unit (110) and the triangulation detection unit (111).

10. The UAV detection system (101) of claim 9, wherein a DC converter (114) is connected with and between the signal amplifier (113) and the triangulation detection unit (111) to convert the filtered RF signals into DC signals.

11. An UAV detection method using the UAV detection system (101) of claim 1, including steps of:
receiving the operational signal from the UAV in the space by the antenna module (104);
filtering out the RF signal of the operational signal received by the antenna module (104) and obtaining at least one of RF 2.4GHz and RF 5.8GHz signals by the signal filtering unit (110);
calculating height, orientation and distance of the UAV according to the filtered RF signal by the triangulation detection unit (111).

12. The UAV detection method of claim 11, wherein the signal filtering unit (110) is configured to identify the signal packet feature of the RF signal of the operational signal and filter out RF spectrum which does not include UAV signal packets of the operational signal by the means of signal packet identification technology and filtering process; if the UAV signal packets are detected, each of the antennas reacts to shift its focus to look for the location where the strongest magnitude of the operational signal is, step by step in a decision tree manner until an actual location of the UAV where the actual strongest magnitude is detected is locked.

13. The UAV detection method of claim 12, wherein every step in the decision tree includes: a first one of the two receiving antennas (108) is rotated so that its focus is shifted in +y or -y direction to track the strongest magnitude of the operational signal, if the first one of the two receiving antennas (108) at initial is rotated in +y direction and receives a stronger magnitude of the operational signal after the rotation, the first one of the two receiving antennas (108) repeats +y direction rotation until a -y direction rotation is required to track another stronger magnitude of the operational signal; a second one of the two receiving antennas (108) is rotated so that its focus is shifted in +x or -x direction to track the strongest magnitude of the operational signal, if the second one of the two receiving antennas (108) at initial is rotated in +x direction and receives a stronger magnitude of the operational signal after the rotation, the second one of the two receiving antennas (108) repeats +x direction rotation until a -x direction rotation is required to track another stronger magnitude of the operational signal.
